# EUROPEAN PATENT APPLICATION

(11) **EP 4 768 851 A1**
(43) Date of publication of application: **01.07.2026**
(21) Application number: 24223898.8
(22) Date of filing: 31.12.2024
(51) Int. Cl.: G01C 15/00

(54) **CALIBRATING A CAMERA DEVICE OF A SURVEYING INSTRUMENT**

(71) Applicant: Hilti Aktiengesellschaft, 9494 Schaan (LI)
(72) Inventor: Gogolla, Torsten, 9494 Schaan (LI); Winter, Andreas, 6800 Feldkirch (AT)
(74) Representative: Hilti Aktiengesellschaft Corporate Intellectual Property

(57) **Abstract**

Method for calibrating a camera device using one or more targets, that are retro-reflective, and a surveying instrument, wherein for each of the targets, the following steps are performed: Capturing the target, determining the center of the target, moving the distance measuring beam to that center, determining at least the center distance to the target, taking first and second images of the target with an illumination light switched on respectively switched off, determining a differential image from the first and second images and determining a centroid for the blob in the differential image. One or more camera parameters of the camera device are estimated from a camera model and the correspondences of the center distances and the centroids.

## Description

The present invention relates to a method for determining a center of a target according to the definition of claim 1, to a method for calibrating a camera device of a surveying instrument using one or more targets according to the definition of claim 5, and to a method for calibrating a camera device of a surveying instrument using two or more views of the camera device according to the definition of claim 8.

### Background of the invention

In surveying instruments, the use of a camera device may provide improved user convenience and new functions. Particularly, a view such as an image or a video feed provided by the camera device and shown on a display of the surveying instrument may be used for assisting target selection, target tracking and for providing the operator with an overview of potential points of interest.

To calibrate a camera device of a surveying instrument, targets having a checkerboard pattern are used. The checkerboard pattern is the most commonly used calibration pattern for camera calibration. Checkerboard patterns consist of alternating white and black squares of equal size, and the corners of the squares that lie inside the pattern are used as control points and can be detected by using a corner detector algorithm.

Drawback of camera calibration known from prior art is that the calibration cannot be performed automatically by the surveying instrument. The operator must provide the specific target with checkerboard pattern and arrange that target in defined orientations.

### Summary of the invention

Therefore, what is desired is to calibrate a camera device of a surveying instrument automatically by the surveying instrument without interaction of an operator. Furthermore, no additional equipment should be required for calibrating the camera device.

These objectives are achieved by realizing the features of the independent claims. Features which further develop the invention in an advantageous manner are described in the dependent claims.

According to an aspect of the present invention, there is provided a method for determining a center of a target, that is retro-reflective, using a surveying instrument including a base, a support being rotatable with respect to the base about a first instrument axis, a measuring head being rotatable with respect to the support about a second instrument axis, a drive system configured to rotate the support about the first instrument axis and/or the measuring head about the second instrument axis, a first angle encoder configured to determine a first angle in a first encoder plane with respect to a rotation of the support about the first instrument axis, a second angle encoder configured to determine a second angle in a second encoder plane with respect to a rotation of the measuring head about the second instrument axis, and a computer system configured to control the surveying instrument and having evaluation and data processing functionality, wherein the measuring head includes a distance measuring device configured to emit a distance measuring beam defining a third instrument axis, the method being performed by the computer system and comprising:
▪ Instructing the surveying instrument to capture the target,
▪ Instructing the drive system to scan the distance measuring beam over the target in a first plane,
▪ Instructing the first angle encoder to determine first angles with time stamps and/or the second angle encoder to determine second angles with time stamps and instructing the distance measuring device to determine signal strengths with time stamps, while the distance measuring beam is scanned over the target in the first plane,
▪ Instructing the drive system to scan the distance measuring beam over the target in a second plane essentially perpendicular to the first plane,
▪ Instructing the first angle encoder to determine first angles with time stamps and/or the second angle encoder to determine second angles with time stamps and instructing the distance measuring device to determine signal strengths with time stamps, while the distance measuring beam is scanned over the target in the second plane, and
▪ Determining the center of the target using the first angles, second angles, signal strengths and time stamps determined in the first plane and in the second plane.

The method according to the present invention allows to determine the center of a target, that is retro-reflective, by means of the distance measuring beam of the surveying instrument. The center of the target can be used to calibrate a camera device of the surveying instrument or to calibrate the instrument axes of the surveying instrument.

To determine the center of the target, it is necessary that the target is captured by the surveying instrument. Any method to search for a target by means of the surveying instrument can be used or the operator is asked to arrange the distance measuring beam anywhere on the target.

The distance measuring beam is scanned by the drive system over the target and the distance measuring device is instructed to determine the signal strengths of the reflected distance measuring beam. When the distance measuring beam hits the target, the distance measuring beam is reflected at the target and the distance measuring device can measure a signal strength. When the distance measuring beam does not hit the target, the distance measuring beam is not reflected, and the distance measuring device does not measure any signal strength or measures a significant smaller signal strength compared to the case of hitting the target.

The method is characterized in that the distance measuring beam is scanned over the target in a first plane and a second plane that is essentially perpendicular to the first plane. Preferably, the first plane is arranged coincident with the first encoder plane, and the second plane is arranged coincident with the second encoder plane.

Preferably, the center of the target is determined by:
▪ After the distance measuring beam has been scanned over the target in the first plane, the computer system determines a first center of the target in the first plane using the first angles, second angles, signal strengths and time stamps determined in the first plane,
▪ The drive system is instructed to scan the distance measuring beam over the target in the second plane running through the first center,
▪ After the distance measuring beam has been scanned over the target in the second plane, the computer system determines a second center of the target in the second plane using the first angles, second angles, signal strengths and time stamps determined in the second plane, and
▪ The center of the target is determined using the first center and second center.

The distance measuring beam is scanned by the drive system in the first plane over the target and in the first plane, the first center of the target is determined. Then, the distance measuring beam is scanned by the drive system in the second plane over the target and in the second plane, the second center of the target is determined. By placing the second plane through the first center of the target, the likelihood of hitting the target can be increased. According to a further aspect of the present invention, there is provided a computer program comprising instructions, which, when executed by a computer system, cause the computer system to carry out the method for determining a center of a target according to the present invention.

The computer program may be stored on the computer system or on a computer-readable medium communicatively connected to the computer system. The term "computer system" includes, but is not limited to, processing units, microprocessors, controlling units, microcontrollers, and various other units capable of processing and/or controlling, and the term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method for determining a center of a target according to the present invention.

According to a further aspect of the present invention, there is provided a method for calibrating a camera device using M, M ≥ 1 targets, that are retro-reflective, and a surveying instrument including a base, a support being rotatable with respect to the base about a first instrument axis, a measuring head being rotatable with respect to the support about a second instrument axis, a drive system configured to rotate the support about the first instrument axis and/or the measuring head about the second instrument axis, a first angle encoder configured to determine a first angle in a first encoder plane with respect to a rotation of the support about the first instrument axis, a second angle encoder configured to determine a second angle in a second encoder plane with respect to a rotation of the measuring head about the second instrument axis, and a computer system configured to control the surveying instrument and having evaluation and data processing functionality, wherein the measuring head includes a distance measuring device configured to emit a distance measuring beam defining a third instrument axis, an illumination light source configured to emit illumination light, and the camera device having a field of view and a camera axis, the method being performed by the computer system and comprising:
▪ Performing an i-th loop M-times with i = 1 ... M, M ≥ 1, the i-th loop comprising:
   - Instructing the surveying instrument to capture an i-th target of the M targets,
   - Determining an i-th center of the i-th target using the method for determining a center of a target according to the present invention,
   - Instructing the drive system to move the distance measuring beam to the i-th center of the i-th target,
   - Instructing the surveying instrument to determine at least an i-th center distance to the i-th target arranged in the i-th center using the distance measuring device,
   - Instructing the surveying instrument to take an i-th first image of the i-th target with the illumination light switched on and an i-th second image of the i-th target with the illumination light switched off using the illumination light source and the camera device,
   - Determining an i-th differential image between the i-th first image and i-th second image, and determining an i-th centroid in the i-th differential image,
▪ Estimating one or more camera parameters of the camera device using at least the M correspondences of the i-th center distance and the i-th centroid with i = 1 ... M, and a camera model for the camera device.

The method according to the present invention allows to calibrate a camera device, wherein calibrating means estimating camera parameters of the camera device. The camera parameters include extrinsic parameters, intrinsic parameters, and lens distortion parameters. The extrinsic parameters represent a rigid transformation from the 3D coordinate frame of the surveying instrument to a 3D coordinate frame of the camera device, and the intrinsic parameters represent a projective transformation from the camera's 3D coordinate frame into the camera's 2D coordinate frame. The extrinsic parameters include a translation vector and a rotation matrix, and the intrinsic parameters include a focal length, an image distance, an optical center, and a skew coefficient.

To estimate at least one of the camera parameters of the camera device, one or more correspondences of points in the 3D coordinate frame of the surveying instrument and their corresponding image points in the 2D image coordinate frame (image plane) of the camera device need to be determined. The points in the 3D coordinate frame of the surveying instrument are defined by a center distance to the center of the target, and the center of the target is determined by the method for determining a center of a target according to the present invention.

The corresponding image points in the 2D image coordinate frame are determined from a blob in the differential image between the first image (illumination light switched on) and the second image (illumination light switched off) taken by the camera device. The blob is a region of the differential image that differs in properties, such as brightness and/or color, compared to surrounding regions of the differential image, and the centroid is a weighted average of the blob in the differential image that is weighted with the area of the blob as the weighting factor, wherein the weighting factor may be equal over the area of the blob, or it may be different.

Using the correspondences and a camera model for the camera device, the camera parameters can be estimated. The method according to the present invention allows to calibrate the camera device automatically without interaction with the operator; the calibration of the camera device can be performed in the field or at the factory.

The camera model describes the mathematical relationship between the coordinates of a point in the 3D coordinate frame of the surveying instrument and its projection onto the image plane of the camera device. By far the most common camera model is the pinhole camera model, which makes the fundamental assumption that rays of light enter the camera device through an infinitely small aperture (pinhole). The pinhole camera model can be used as a first order approximation, it does not include geometric distortions or blurring of unfocussed objects caused by lenses and finite sized apertures. To increase the quality of the camera model, pinhole camera model can be extended by including lens distortions parameters (radial and/or tangential), and other parameters. A complex camera model cannot be solved analytically, it is solved numerically by well-known methods.

The number of correspondences of 3D points in the surveying instruments coordinate frame and 2D image points in the image plane (2D image coordinate frame) can be increased by using more than one retro-reflective target and/or using more than one view of the camera device. For each of the M targets, the same loop of steps is performed. The loop includes capturing the target, determining the center of the target, moving the distance measuring beam to that center, determining at least the center distance to the target using the distance measuring device, taking first and second images of the target with the illumination light switched on respectively switched off, determining a differential image from the first and second images and determining a centroid for the blob in the differential image. The one or more camera parameters are estimated from the camera model and the correspondences of the center distances and the centroids.

In a preferred version of the method,
▪ the surveying instrument is instructed to determine besides the i-th center distance to the i-th target arranged in the i-th center an i-th first center angle using the first angle encoder and an i-th second center angle using the second angle encoder,
▪ the computer system determines an i-th center position with i = 1 ... M, using the i-th center distance, i-th first center angle and i-th second center angle, and
▪ the one or more camera parameters of the camera device are estimated using at least the M correspondences of the i-th center position and the i-th centroid with i = 1 ... M, and the camera model for the camera device.

The points in the 3D coordinate frame are defined by a center position to the center of the target, and the center of the target is determined by the method for determining a center of a target according to the present invention. The center position is determined from the center distance to the center of the target and from a first center angle and a second center angle measured by the first angle encoder respectively the second angle encoder.

Preferably, the surveying instrument is instructed to take a first image of the target with the illumination light switched on and a second image of the target with the illumination light switched off in at least two different views of the camera device defined by different azimuth angles in the first encoder plane and/or different zenith angles in the second encoder plane, and for the different views of the camera device, the computer system determines differential images between the first and second images and determines centroids in the differential images. The number of correspondences of 3D points and 2D image points can be increased by using more than one view of the camera device.

According to a further aspect of the present invention, there is provided a method for calibrating a camera device using a target, that is retro-reflective, and a surveying instrument including a base, a support being rotatable with respect to the base about a first instrument axis, a measuring head being rotatable with respect to the support about a second instrument axis, a drive system configured to rotate the support about the first instrument axis and/or the measuring head about the second instrument axis, a first angle encoder configured to determine a first angle in a first plane with respect to a rotation of the support about the first instrument axis, a second angle encoder configured to determine a second angle in a second plane with respect to a rotation of the measuring head about the second instrument axis, and a computer system configured to control the surveying instrument and having evaluation and data processing functionality, wherein the measuring head includes a distance measuring device configured to emit a distance measuring beam defining a third instrument axis, an illumination light source configured to emit illumination light, and the camera device having a field of view and a camera axis, the method being performed by the computer system and comprising:
▪ Instructing the surveying instrument to capture the target,
▪ Determining a center of the target using a method for determining a center of a target according to the present invention,
▪ Instructing the drive system to move the distance measuring beam to the center of the target,
▪ Instructing the surveying instrument to determine a center distance, a first center angle and a second center angle to the target arranged in the center using the distance measuring device, first angle encoder and second angle encoder,
▪ Determining a center position for the target arranged in the center using the center distance, first center angle and second center angle,
▪ Performing a j-th loop N-times with j = 1 ... N, N ≥ 2, the j-th loop comprising:
   - Instructing to set the camera device to a j-th view, wherein the j-th view is defined by a j-th azimuth angle in the first encoder plane and a j-th zenith angle in the second encoder plane,
   - Instructing the surveying instrument to take a j-th first image of the target with the illumination light switched on and a j-th second image of the target with the illumination light switched off using the camera device and the illumination light source, and
   - Determining a j-th differential image between the j-th first image and j-th second image, and determining a j-th centroid in the j-th differential image,
▪ Estimating one or more camera parameters of the camera device using at least the center position of the target, the N correspondences of the j-th azimuth/zenith angles and the j-th centroid with j = 1 ... N, and a camera model for the camera device.

To estimate at least one of the camera parameters one or more correspondences of points in the 3D coordinate frame of the surveying instrument and their corresponding image points in the 2D image coordinate frame of the camera device need to be determined. The points in the surveying instruments 3D coordinate frame are defined by a center position to the center of the target, and the center of the target is determined by the method for determining a center of a target according to the present invention; the corresponding image points in the 2D image coordinate frame are determined from a blob in the differential image between the first image (illumination light switched on) and the second image (illumination light switched off) taken by the camera device. Using these correspondences and a camera model for the camera device, the camera parameters can be estimated. The method according to the present invention allows to calibrate the camera device automatically without interaction with the operator; the calibration can be performed in the field or at the factory.

The number of correspondences of 3D points and 2D image points can be increased by using more than one view for the camera device. For each of the different views, the same loop of steps is performed. The loop includes setting the camera device to the view defined by an azimuth angle in the first encoder plane and a zenith angle in the second encoder plane, taking first and second images of the target with the illumination light switched on respectively switched off, determining a differential image from the first and second images and determining a centroid from a blob in the differential image. The one or more camera parameters are estimated from the camera model, the center position of the target arranged in the center and the correspondences of the azimuth/zenith angles and the centroids.

According to a further aspect of the present invention, there is provided a computer program comprising instructions, which, when executed by a computer system, cause the computer system to carry out the method for calibrating a camera device according to the present invention.

The computer program may be stored on the computer system or on a computer-readable medium communicatively connected to the computer system. The term "computer system" includes, but is not limited to, processing units, microprocessors, controlling units, microcontrollers, and various other units capable of processing and/or controlling, and the term "computer-readable medium" includes, but is not limited to, portable or non-portable storage devices, optical storage devices, and various other mediums capable of storing, containing, or carrying instruction(s) and/or data.

According to a further aspect of the present invention, there is provided an apparatus comprising means for carrying out the method for calibrating a camera device according to the present invention.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows an operator using a surveying instrument deployed at a worksite, the surveying instrument comprising a measuring unit mounted on a tripod and a remote controller connected via a communication link to the measuring unit,
- FIGS. 2A, B: show an exemplary version of the measuring unit used in the surveying instrument of FIG. 1 (FIG. 2A) and a block diagram of the main components of the surveying instrument (FIG. 2B),
- FIG. 3: shows the optical components of the measuring unit used in the surveying instrument of FIG. 1 in an exemplary version,
- FIG. 4: shows schematically the 3D coordinate frame of the surveying instrument, the 3D coordinate frame of the camera device, and the 2D image coordinate frame of the camera device,
- FIG. 5: shows a method for determining a center of a target according to the present invention in a flow chart,
- FIGS. 6A-D: show schematically how the center of the target is determined by scanning in a first plane and a second plane,
- FIG. 7: shows a first exemplary version of a method for calibrating a camera device according to the present invention in a flow chart,
- FIGS. 8A-D: show a first image taken with an illumination light switched on (FIG. 8A), a second image taken with the illumination light switched off (FIG. 8B), a differential image between the first image and second image (FIG. 8C), and a centroid determined in the differential image (FIG. 8D),
- FIG. 9: shows a second exemplary version of a method for calibrating a camera device according to the present invention in a flow chart, and
- FIGS. 10A, B: show schematically the camera device arranged in a first view (FIG. 10A) and in a second view (FIG. 10B).

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

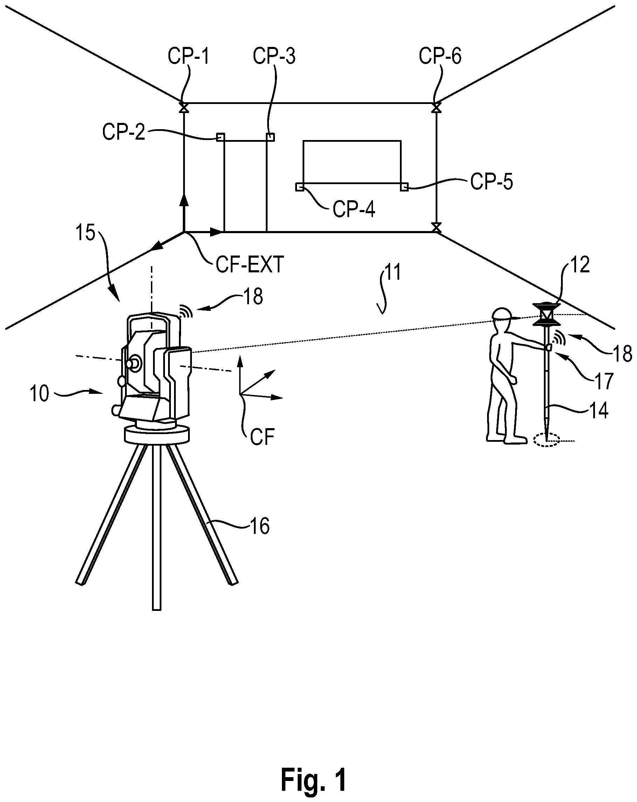

**FIG. 1** shows an operator using a surveying instrument **10** deployed at a worksite **11.** The worksite 11 may be a construction site, inside or outside, or a surveying site, amongst others. In addition to the surveying instrument 10, a target **12** that is retro-reflective and remote from the surveying instrument 10 is deployed at the worksite 11mounted on top of a pole **14.** A retro-reflective target is a target that reflects radiation, such as laser light, back to its source with only small scattering. Well-known examples for retro-reflective targets are prisms (corner cubes), cat-eyes and foils, wherein any kind of retro-reflective target can be used.

The surveying instrument 10 is formed as a robotic total station and comprises a measuring unit **15** that is mounted on a mounting support structure in the form of a tripod **16.** The surveying instrument 10 also comprises a removable control panel in the form of a remote controller **17** that can be used for remote control of the measuring unit 15 via a wireless connection **18.**

Before the operator can use the total station 10 for layouting, measuring and/or other tasks, the total station 10 must be stationed via a stationing process to the worksite 11. From prior art, different stationing processes are known, such as free-stationing process, model-based stationing process, automatic stationing process, or any other stationing process.

The basic concept of free-stationing processes is that at an initial phase, a number of control points, here control points **CP-1, CP-2, CP-3, CP-4, CP-5, CP-6,** are positioned at scattered locations at the worksite 11. The control points can be formed as prisms, cat-eyes, foils, or other forms of retro-reflective targets for returning the laser beam to the total station 10. The exact location of the control points is determined and logged in terms of coordinates on a specified coordinate frame, here a coordinate frame **CF-EXT** of the worksite 11.

To determine the pose (position and orientation) of the total station 10 in the coordinate frame CF-1 of the worksite 11, the total station 10 sights a number of the control points and takes measurement samples of distance and angle data in its coordinate frame **CF.**

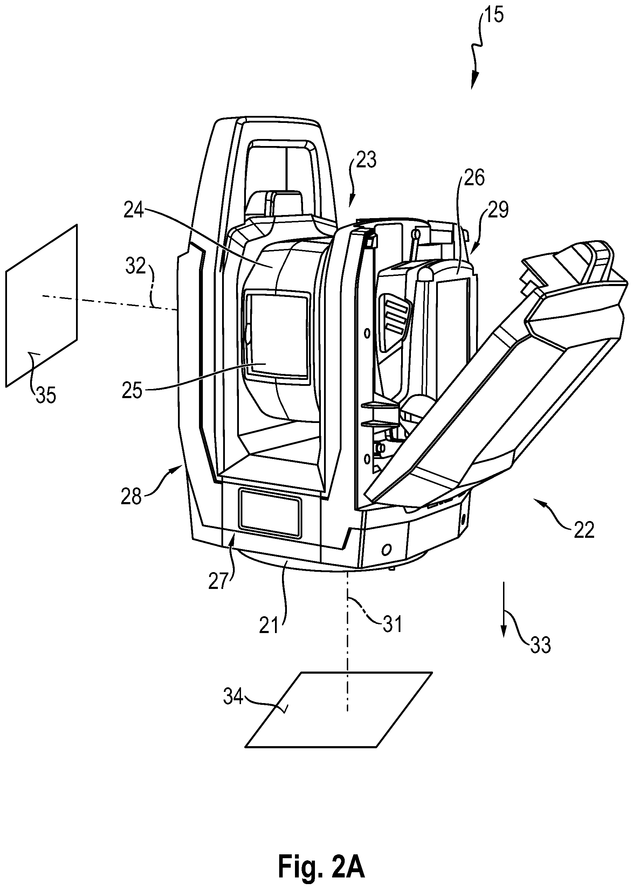

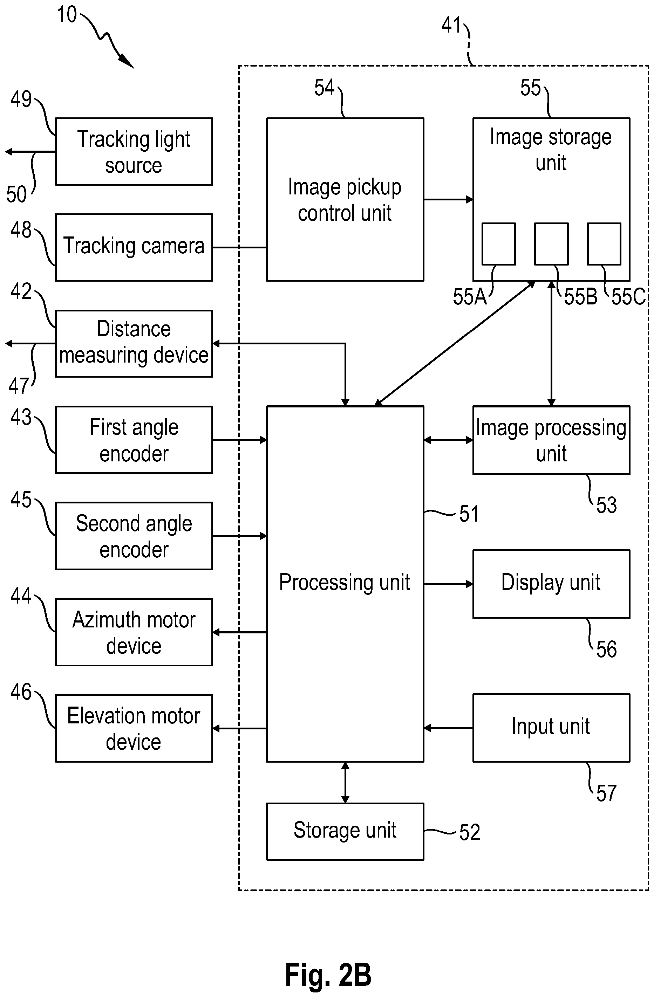

**FIGS. 2A****, B** show an exemplary version of the measuring unit 15 used in the surveying instrument 10 of FIG. 1 in a perspective view (FIG. 2A) and a block diagram of the main components of the surveying instrument 10 (FIG. 2B).

The surveying instrument 10 is designed as robotic total station and the measuring unit 15 comprises a base **21,** a support **22,** and a measuring head **23.** The measuring head 23 is enclosed by a housing **24,** which includes an exit window **25.** In the housing 24, a distance measuring device, that can emit a distance measuring beam, and a tracking device, that can emit tracking light, are arranged. The distance measuring beam and the tracking light are emitted through the exit window 25 to leave the housing 24.

In the exemplary version of FIG. 2A, the support 22 is U-formed and includes a bottom portion **27,** a first side portion **28,** and a second side portion **29;** instead of the U-formed support a L-formed support or any other formed support can be used. The support 22 can rotate completely around its circumference at a full 360° angle or at an angle smaller than the full 360° angle with respect to the base 21 about a first instrument axis **31,** also called vertical axis. The measuring head 23 is pivotably mounted to the support 22 about a second instrument axis **32,** also called trunnion axis, and is arranged between the first side portion 28 and the second side portion 29 of the support. The first instrument axis 31 can be aligned parallel to a local direction of gravity **33,** and the second instrument axis 32 can be aligned perpendicular to the local direction of gravity 33, or the orientation of the first instrument axis 31 and of the second instrument axis 32 can be determined with respect to the local direction of gravity 33 or a horizontal plane being perpendicular to the local direction of gravity 33.

An azimuth motor device and a first angle encoder may be located in the bottom portion 27 of the support 22 and allow to rotate the measuring unit 15 about the first instrument axis 31 and to determine the direction of the distance measuring beam in a first encoder plane **34** essentially perpendicular to the first instrument axis 31. An elevation motor device and a second angle encoder may be located in the first side portion 28 of the support 22 and allow the measuring head 23 to pivot about the second instrument axis 32 and to determine the direction of the distance measuring beam in a second encoder plane **35** essentially perpendicular to the second instrument axis 32.

FIG. 2B shows a block diagram of the main components of the total station 10. The total station 10 includes a control device **41,** a distance measuring device **42,** a first angle encoder **43,** an azimuth motor device **44,** a second angle encoder **45,** and an elevation motor device **46.** The main components 41, 42, 43, 44, 45, and 46 are mandatory for a robotic total station, whereas a manual total station does not include the azimuth motor device 44 and the elevation motor device 46. The azimuth motor device 44 and the elevation motor device 46 are summarized as drive system of the measuring unit 15.

The distance measuring device 42 may include a laser transmitter, a laser driver circuit, a photosensor, and a laser receiver interface circuit. The laser driver circuit provides current for the laser transmitter which emits a distance measuring beam **47.** The photosensor receives at least a part of the distance measuring beam 47 reflected at a target or a surface of the worksite, and the current signal that is outputted by the photosensor is directed to the laser receiver interface circuit. After appropriate amplification, demodulation and processing, distance data are sent via the first input/output interface circuit to the control device 41.

The first angle encoder 43 provides signals to the control device 41, so that it knows exactly in which first angle the distance measuring beam 47 is arranged in the first plane 34, and the second angle encoder 45 provides signals to the control device 41, so that it knows exactly in which second angle the distance measuring beam 47 is arranged in the second plane 35.

Angle encoders that can provide the required accuracies for the total station 10 are magnetic encoders or optical encoders. Optical encoders use a transmissive scale disc made out of glass or plastic with an LED illumination on one side of the scale and an image or line sensor on the other side of the scale; the scale has a code to provide absolute readings on any angle. US 7,589,313 B2 describes a possible encoder technology that can be used for the first and second angle encoders.

The azimuth motor device 44 may include an azimuth motor, which is the motive force to rotate the main housing 22 of the measuring unit 15 about the first instrument axis 31, and an azimuth motor driver circuit, which will provide the proper current and voltage to drive the azimuth motor. The elevation motor device 46 may include an elevation motor, which is the motive force to pivot the measuring head 23 about the second instrument axis 32, and an elevation motor driver circuit, which will provide the proper current and voltage to drive the elevation motor.

In order to track a target, such as the target 12 in FIG. 1 automatically via the total station 10, the total station 10 includes a tracking camera **48** and a tracking light source **49** that emits tracking light **50.** The tracking camera 48 is used to enable measuring to static reflective targets and tracking of moving retro-reflective targets. The tracking camera 48 gives information about the center of gravity (centroid) of a target and this information is used to steer the drive system to direct the distance measuring beam 47 on the center of the retro-reflective target and to measure the 3D coordinates of the target. In order to track retro-reflective targets in all ambient lighting conditions, even in darkness, the tracking light source 49 is used to produce the necessary illumination for the tracking camera 48. The tracking camera 48 should have a filter that fits to the wavelength of the tracking light source 49.

The control device 41 primarily comprises a processing unit **51,** a storage unit **52,** an image processing unit **53,** an image pickup control unit **54,** an image storage unit **55,** a display unit 56, and an input unit **57.** The processing unit 51, the image processing unit 53, and the image pickup control unit 54 define a computer system having evaluation, data processing and/or control functionality for the surveying instrument 10.

In the storage unit 52, there may be a program storage area for different types of computer programs and a data storage area for storing data such as the results of the distance and angle measurements. In the program storage area, various types of computer programs may be stored. These computer programs can include a calculating program for calculating coordinates from the distance and angle measurements, image processing programs for performing image processing, a sequence program for selecting a point of interest in an image, for executing the distance measurement on the selected point of interest, a tracking program for tracking a reflector target, a search program for searching a retro-reflective target when the target is missed out of sight, and other computer programs, such as a program for determining a center of a retro-reflective target, a program for calibrating a camera device using one or more targets, and a program for calibrating a camera device using two or more views of the camera device.

The image storage unit 55 may include a first image storage unit **55A,** a second image storage unit **55B,** and a third image storage unit **55C.** An image when the tracking light source 49 is turned on and an image when the tracking light source 49 is turned off may be acquired by the tracking camera 48 and by turning-on and turning-off operation of an electronic shutter in synchronization with the flashing of the tracking light source 49. The image data when the tracking light 50 is turned on can be stored in the first image storage unit 55A, and the image data when the tracking light 50 is turned off can be stored in the second image storage unit 55B. The image processing unit 53 subtracts the image data when the tracking light 50 is turned off as stored in the second image storage unit 55B from the image data when the tracking light 50 is turned on as stored in the first image storage unit 55A and acquires only the target image. The image data of the target image thus acquired is stored on the third image storage unit 55C.

The control device 41 comprises the display unit 56 for showing images captured by a camera. The display unit 56 may be an integral part of the measuring unit 15, but more preferably, the display unit 56 is included in the remote controller 17 that can be used for remote control of the total station 10. It is even conceivable that the total station 10 is fully remote controlled, wherein the display unit 56 may be in the form of a computer screen far away, and wherein information to and from the total station 10 are transferred over a wireless network. The display unit 56 may include a screen, a touch screen, etc.

The control device 41 comprises the input unit 57 that may be an integral part of the measuring unit 15, but more preferably, the input unit 57 is included in the remote controller 17 that can be used for remote control of the total station 10. The input unit 57 may include various input elements, such as a mouse, a keyboard, a touchscreen, etc.

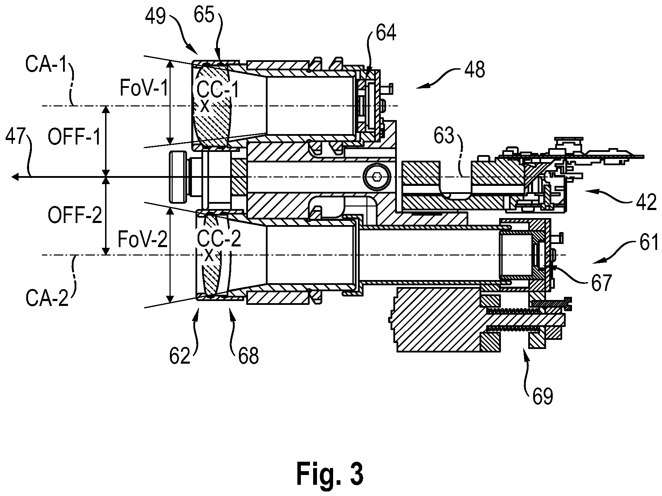

**FIG. 3** shows the optical components of the measuring head 23 in an exemplary version. The measuring head 23 includes the distance measuring device 42, the tracking camera 48, and the tracking light source 49.

Optionally, the measuring head 23 can include a second camera **61** and a second light source **62.** The second camera 61 can be an aiming camera that is working in the visible spectrum, or the second camera can be a finding camera that is working in the infrared spectrum. The wavelength of the second light source 62 should fit to the second camera 61.

The distance measuring device 42 emits the distance measuring beam 47 defining a third instrument axis **63,** also called targeting axis. The tracking camera 48 includes a first image sensor **64** and a first optical lens **65.** The tracking camera 48 has a first field of view **FoV-1** and a first camera axis **CA-1.** In the exemplary version, the first camera axis CA-1 is arranged with a first offset **OFF-1** to the third instrument axis 63, and the focal length of the tracking camera 48 is fixed; alternatively, the focal length of the tracking camera 48 may be adaptable within a range between a minimum focal length and a maximum focal length.

Typical image sensors used for tracking cameras are monochrome or RGB-Bayer-filter CMOS sensors with small pixels and global shutter. To enable a smooth tracking even with fast moving reflective targets, the field of view should not be too small. A wider field of view is better for finding, re-finding, and tracking at short distances, but could be problematic for resolution.

The optionally second camera 61 may include a second image sensor **67** and a second optical lens **68.** The focus of the second camera 61 can be changed for example by using a controllable liquid optical lens, by moving the lens block, and/or by moving the image sensor. In the exemplary version, the focal length of the second camera 61 is adaptable by a motor **69** moving the image sensor 67 within a range between a minimum focal length and a maximum focal length. The second camera 61 can have a second field of view **FoV-2** and a second camera axis **CA-2.** The second camera axis CA-2 is arranged with a second offset **OFF-2** to the third instrument axis 63.

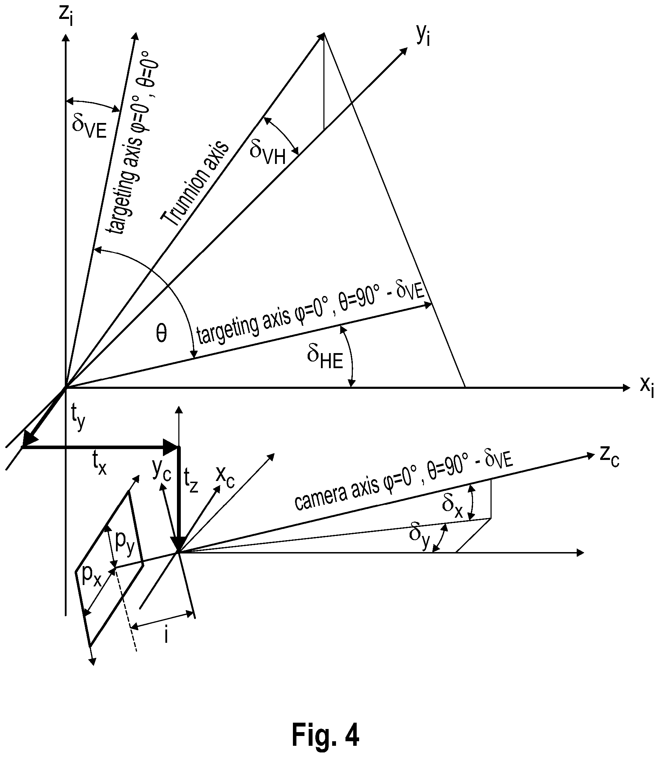

**FIG. 4** shows schematically the coordinate frame of the surveying instrument 10 and a 3D coordinate frame and a 2D image plane of the camera device 48. The camera model that is used for calibrating the camera device describes the mathematical relationship between the coordinates of a point in the 3D coordinate frame of the surveying instrument 10 and its projection onto the image plane of the camera device 48.

The coordinate frame of the surveying instrument 10 is defined by three coordinate axes **xᵢ**, **yᵢ**, **zᵢ**. The instrument axes can deviate from the ideal coordinate axes by axis errors. The axis errors are called height index δ_{VE} (vertical collimation axis error), collimation axis error δ_{HE} (horizontal collimation axis error) and trunnion axis error δ_{VH}.

The 3D coordinate frame of the camera device 48 is defined by three camera axes **x_{c}**, **y_{c}, z_{c}**, and its origin is shifted by **tₓ**, **t_{y}**, **t_{z}** to the origin of the surveying instrument. The 2D image plane of the camera device 48 is originated at its principal point **pₓ**, **p_{y}** and its x-axis and y-axis define the image plane. The camera axes x_{c}, y_{c}, z_{c} can have camera angle errors, the first camera axis x_{c} can have a first camera angle error δ_{X}, also called pitch, the second camera axis y_{c} can have a second camera angle error δ_{y}, also called yaw, and the third camera axis z_{c} can have a third camera angle error, also called roll (not shown in FIG. 4).

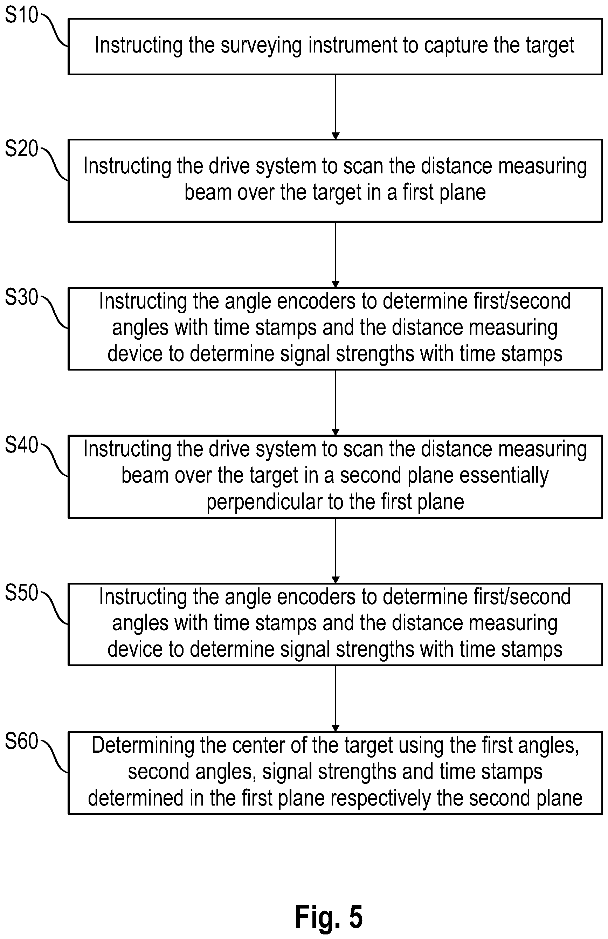

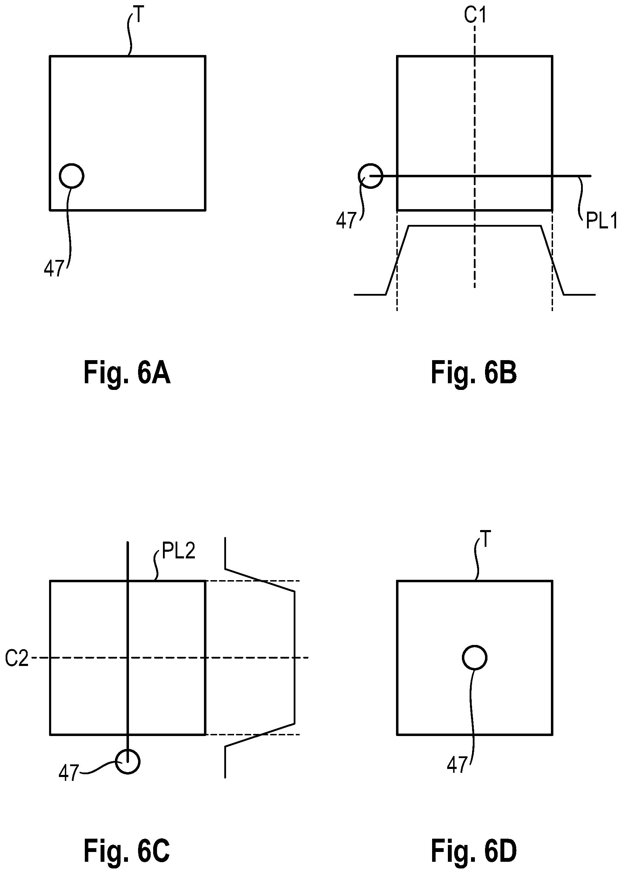

**FIG. 5** shows a method for determining a center of a target **T** according to the present invention in a flow chart, and **FIGS. 6A-D** show schematically how the center of the target T can be determined. The method is performed by the computer system 51, 53, 54 and comprises the following steps:
▪ Instructing the surveying instrument 10 to capture the target T (step S10),
▪ Instructing the drive system 44, 46 to scan the distance measuring beam 47 over the target T in a first plane **PL1** (step **S20),**
▪ Instructing the first angle encoder 43 to determine first angles with time stamps and/or the second angle encoder 45 to determine second angles with time stamps and instructing the distance measuring device 42 to determine signal strengths with time stamps, while the distance measuring beam 47 is scanned in the first plane PL1 (step **S30),**
▪ Instructing the drive system 44, 46 to scan the distance measuring beam 47 over the target T in a second plane **PL2** essentially perpendicular to the first plane PL1 (step **S40),**
▪ Instructing the first angle encoder 43 to determine first angles with time stamps and/or the second angle encoder 45 to determine second angles with time stamps and instructing the distance measuring device 42 to determine signal strengths with time stamps, while the distance measuring beam 47 is scanned in the second plane PL2 (step **S50),** and
▪ Determining the center of the target T using the first angles, second angles, signal strengths and time stamps determined in the first plane PL1 and in the second plane PL2 (step **S60).**

FIG. 6A shows the target T that is captured by the surveying instrument (step S10). Any method to search for a target by means of the surveying instrument 10 can be used or the operator is asked to arrange the distance measuring beam 47 anywhere on the target T. The distance measuring beam 47 is scanned by the drive system over the target and the distance measuring device 42 is instructed to determine the signal strengths of the reflected distance measuring beam.

When the distance measuring beam 47 hits the target T, the distance measuring beam 47 is reflected at the target T and the distance measuring device 42 can measure a signal strength. When the distance measuring beam 47 does not hit the target T, the distance measuring beam 47 is not reflected, and the distance measuring device 42 cannot measure any signal strength or measures a significant smaller signal strength compared to the case of hitting the target.

The distance measuring beam 47 is scanned by the drive system in the first plane PL1 over the target T and in the first plane PL1, a first center **C1** of the target T is determined (FIG. 6B). Then, the distance measuring beam 47 is scanned by the drive system in the second plane PL2 over the target T and in the second plane PL2, a second center **C2** of the target T is determined (FIG. 6C). By placing the second plane PL2 through the first center C1 of the target T, the likelihood of hitting the target T can be increased.

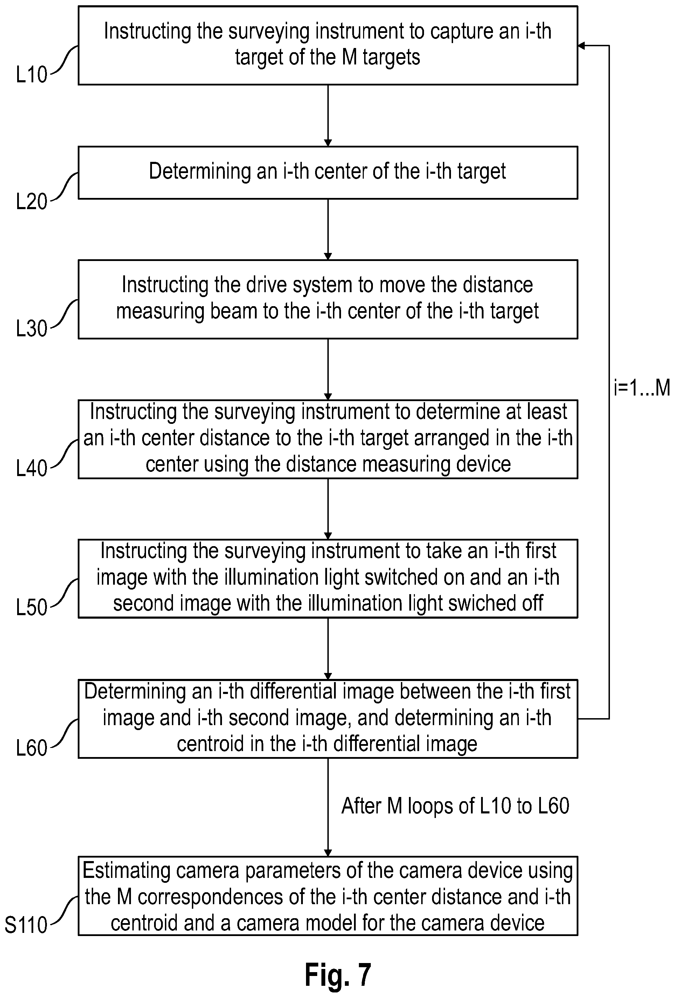

**FIG. 7** shows a first exemplary version of a method for calibrating a camera device according to the present invention in a flow chart. The method is performed by the computer system 51, 53, 54, the surveying instrument 10 and the target T to calibrate the camera device 48; it comprises the following steps:
▪ Performing an i-th loop M-times with i = 1 ... M, M ≥ 1, the i-th loop comprising:
   - Instructing the surveying instrument 10 to capture an i-th target of the M targets (step **L10),**
   - Determining an i-th center of the i-th target using the method for determining a center of a target shown in FIG. 4 (step **L20),**
   - Instructing the drive system 44, 46 to move the distance measuring beam 47 to the i-th center of the i-th target (step **L30),**
   - Instructing the surveying instrument 10 to determine at least an i-th center distance to the i-th target arranged in the i-th center using the distance measuring device 42 (step **L40),**
   - Instructing the surveying instrument 10 to take an i-th first image of the i-th target with the illumination light 50 switched on and an i-th second image of the i-th target with the illumination light 50 switched off using the illumination light source 49 and the camera device 48 (step **L50),**
   - Determining an i-th differential image between the i-th first image and i-th second image, and determining an i-th centroid in the i-th differential image (step **L60),**
▪ Estimating one or more camera parameters of the camera device 48 using at least the M correspondences of the i-th center distance and the i-th centroid with i = 1 ... M, and a camera model for the camera device 48 (step **S110).**

To estimate the camera parameters of the camera device 48, one or more correspondences of 3D points in the 3D coordinate frame of the surveying instrument 10 and their corresponding image points in the 2D image coordinate frame of the camera device 48 need to be determined. The points in the surveying instruments 3D coordinate frame are defined by a center position to the center of the target, and the center of the target is determined by the method for determining a center of a target according to the present invention. The corresponding image points in the 2D image coordinate frame are determined from a blob in the differential image between the first image (illumination light switched on) and the second image (illumination light switched off) taken by the camera device 48.

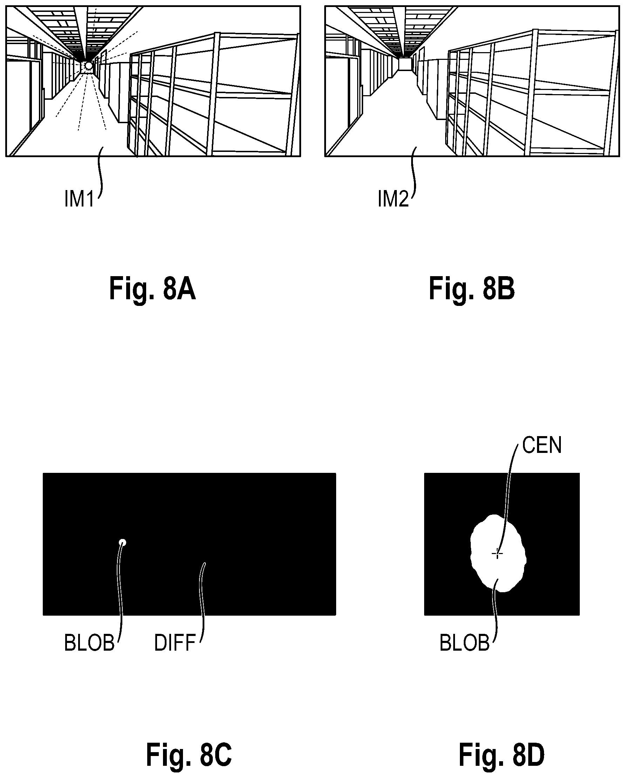

**FIGS. 8A-D** show a first image **IM1** taken by the camera device 48 with the illumination light 50 switched on (FIG. 8A), a second image **IM2** taken by the camera device 48 with the illumination light 50 switched off (FIG. 8B), a differential image **DIFF** between the first image IM1 and second image IM2 showing a blob **BLOB** (FIG. 8C), and a centroid **CEN** determined in the differential image DIFF (FIG. 8D).

The centroid CEN is a weighted average like a center of gravity but weighted with a geometric property like area or volume and not a physical property like weight or mass; that means that centroids are properties of pure shapes, not physical objects. For the method for calibrating a camera device according to the present invention, the centroid is a weighted average of the blob BLOB in the differential image DIFF that is weighted with the area of the blob as the weighting factor. The weighting factor may be equal over the area of the blob BLOB, or it may be different.

A blob is a region of an image, such as the differential image, that differs in properties, such as brightness and/or color, compared to surrounding regions of the image. One of the most common methods to detect a blob in an image is convolution. For the method for calibrating a camera device according to the present invention, any method to detect a blob in an image can be used.

The number of correspondences of 3D points in the surveying instruments coordinate frame and 2D image points in the image plane of the camera device can be increased by using more than one retro-reflective target. For each of the retro-reflective targets, the steps L10 to L60 are performed.

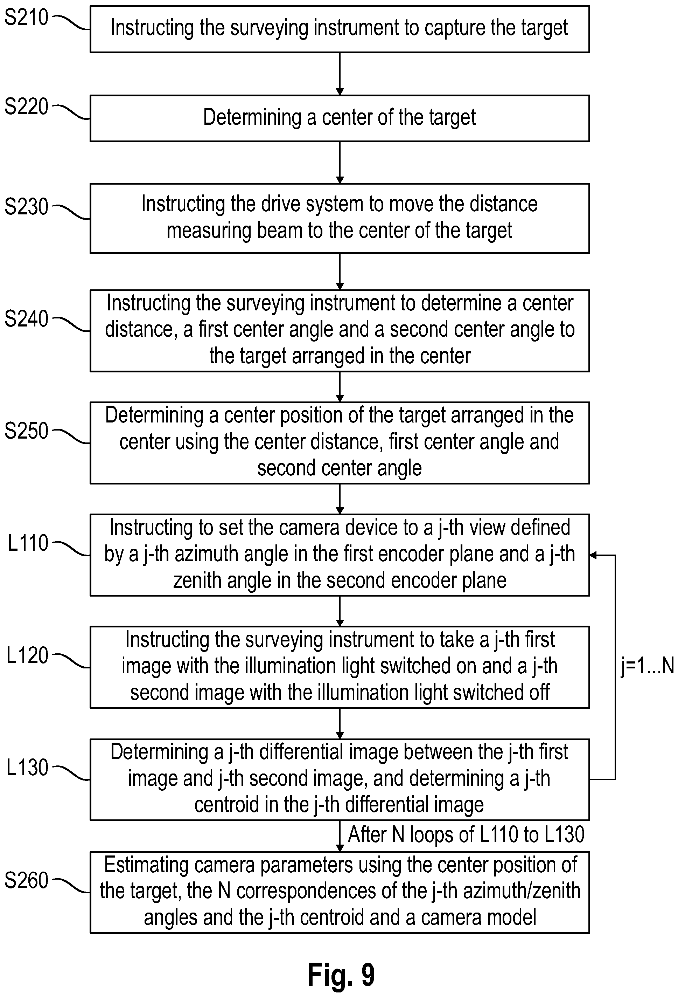

**FIG. 9** shows a second exemplary version of a method for calibrating a camera device according to the present invention in a flow chart. The method is performed by the computer system 51, 53, 54, the surveying instrument 10 and the target T to calibrate the camera device 48; it comprises the following steps:
▪ Instructing the surveying instrument 10 to capture the target T (step **S210),**
▪ Determining a center of the target T using the method for determining a center of a target as shown in FIG. 4 (step **S220),**
▪ Instructing the drive system 44, 46 to move the distance measuring beam 47 to the center of the target T (step **S230),**
▪ Instructing the surveying instrument 10 to determine a center distance, a first center angle and a second center angle to the target T arranged in the center using the distance measuring device 42, first angle encoder 43 and second angle encoder 45 (step **S240),**
▪ Determining a center position of the target T arranged in the center using the center distance, first center angle and second center angle (step **S250),**
▪ Performing a j-th loop N-times with j = 1 ... N, N ≥ 2, the j-th loop comprising:
   - Instructing to set the camera device 48 to a j-th view, wherein the j-th view is defined by a j-th azimuth angle in the first encoder plane and a j-th zenith angle in the second encoder plane (step **L110),**
   - Instructing the surveying instrument 10 to take a j-th first image of the target T with the illumination light 50 switched on and a j-th second image of the target T with the illumination light 50 switched off using the camera device 48 and the illumination light source 49 (step **L120),** and
   - Determining a j-th differential image between the j-th first image and j-th second image, and determining a j-th centroid in the j-th differential image (step **L130),**
▪ Estimating one or more camera parameters of the camera device 48 using at least the center position of the target T, the N correspondences of the j-th azimuth/zenith angles and the j-th centroid with j = 1 ... N, and a camera model for the camera device 48 (step **S260).**

To estimate the camera parameters of the camera device 48, one or more correspondences of points in the 3D coordinate frame of the surveying instrument 10 and their corresponding image points in the 2D image coordinate frame of the camera device 48 need to be determined. The points in the surveying instruments 3D coordinate frame are defined by the center position to the center of the target, and the center of the target is determined by the method for determining a center of a target according to the present invention. The corresponding image points in the 2D image coordinate frame are determined from a blob in the differential image between the first image (illumination light switched on) and the second image (illumination light switched off) taken by the camera device 48.

The number of correspondences of 3D points in the coordinate frame of the surveying instrument and 2D image points in the image plane of the camera device can be increased by using more than one view for the camera device. For each of the different views, the same loop of steps L110 to L130 is performed. The loop includes setting the camera device to the view defined by an azimuth angle in the first encoder plane and a zenith angle in the second encoder plane, taking first and second images of the target with the illumination light switched on respectively switched off, determining a differential image from the first and second images and determining a centroid from a blob in the differential image. The one or more camera parameters are estimated from the camera model, the center position of the target arranged in the center and the correspondences of the azimuth/zenith angles and the centroids.

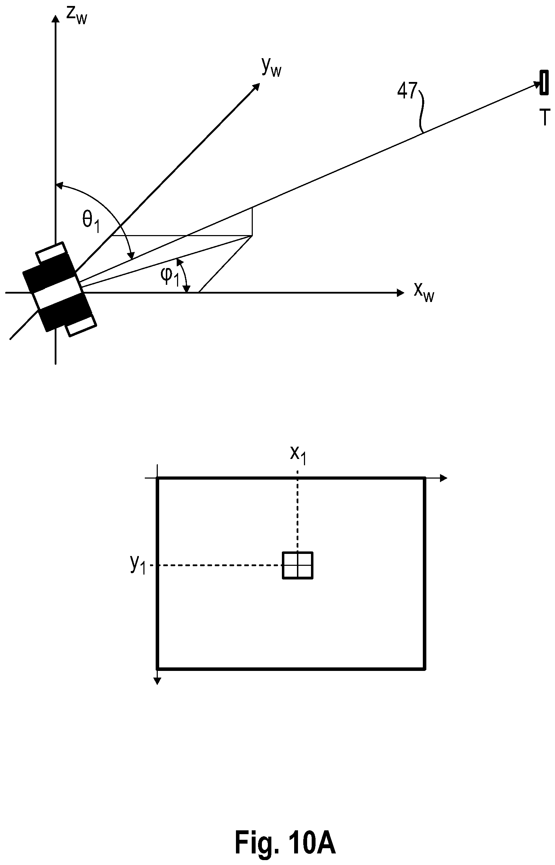

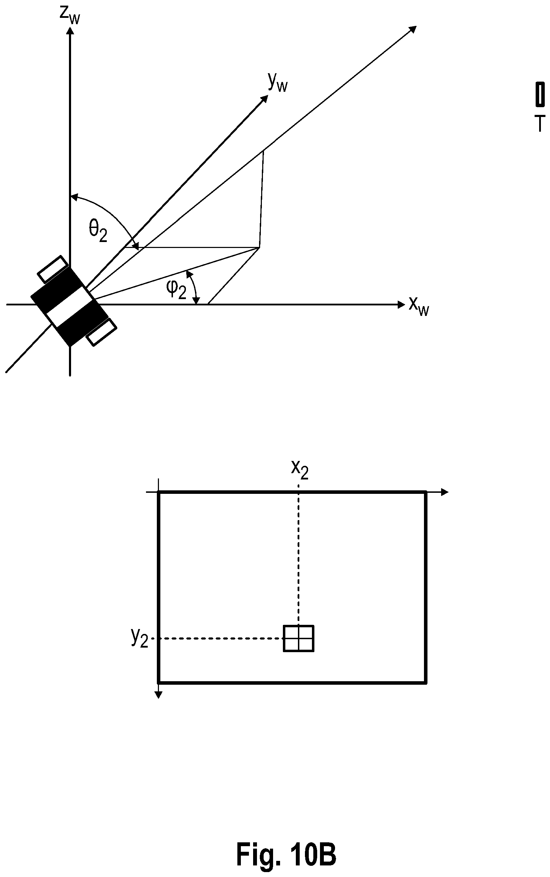

**FIGS. 10A****, B** show schematically the camera device 48 arranged in a first view (FIG. 10A) and in a second view (FIG. 10B). The first view is defined by a first azimuth angle φ₁ in the first encoder plane and a first zenith angle θ₁ in the second encoder plane, and the second view is defined by a second azimuth angle φ₂ in the first encoder plane and a second zenith angle θ₂ in the second encoder plane. In the exemplary version, the second view differs in the zenith angle from the first view, the first azimuth angle φ₁ and second azimuth angle φ₂ are equal.

In the first view shown in FIG. 10A, the image point in the image plane is defined by **x₁**, **y₁**, and in the second view shown in FIG. 10B, the image point in the image plane is defined by **x₂, y₂.** The image points are determined from a blob in the differential image between the first image taken by the camera device 48 with the illumination light switched on and the second image taken by the camera device 48 with the illumination light switched off.

## Claims

1. A method for determining a center of a target (12, CP-1, CP-2, CP-3, CP-4, CP-5, CP-6; T), that is retro-reflective, using a surveying instrument (10) including a base (21), a support (22) being rotatable with respect to the base (21) about a first instrument axis (31), a measuring head (23) being rotatable with respect to the support (22) about a second instrument axis (32), a drive system (44, 46) configured to rotate the support (22) about the first instrument axis (31) and/or the measuring head (23) about the second instrument axis (32), a first angle encoder (43) configured to determine a first angle in a first encoder plane (34) with respect to a rotation of the support (22) about the first instrument axis (31), a second angle encoder (45) configured to determine a second angle in a second encoder plane (35) with respect to a rotation of the measuring head (23) about the second instrument axis (32), and a computer system (51, 53, 54) configured to control the surveying instrument and having evaluation and data processing functionality, wherein the measuring head (23) includes a distance measuring device (42) configured to emit a distance measuring beam (47) defining a third instrument axis (63), the method being performed by the computer system (51, 53, 54) and comprising:
▪ Instructing the surveying instrument (10) to capture the target (T),
▪ Instructing the drive system (44, 46) to scan the distance measuring beam (47) over the target (T) in a first plane (PL1),
▪ Instructing the first angle encoder (43) to determine first angles with time stamps and/or the second angle encoder (45) to determine second angles with time stamps and instructing the distance measuring device (42) to determine signal strengths with time stamps, while the distance measuring beam (47) is scanned in the first plane (PL1),
▪ Instructing the drive system (44, 46) to scan the distance measuring beam (47) over the target (T) in a second plane (PL2) essentially perpendicular to the first plane (PL1),
▪ Instructing the first angle encoder (43) to determine first angles with time stamps and/or the second angle encoder (45) to determine second angles with time stamps and instructing the distance measuring device (42) to determine signal strengths with time stamps, while the distance measuring beam (47) is scanned in the second plane (PL2), and
▪ Determining the center of the target (T) using the first angles, second angles, signal strengths and time stamps determined in the first plane (PL1) and in the second plane (PL2).

2. The method of claim 1, wherein the center of the target (T) is determined by:
▪ After the distance measuring beam (47) has been scanned over the target (T) in the first plane (PL1), the computer system determines a first center (C1) of the target (T) in the first plane (PL1) using the first angles, second angles, signal strengths and time stamps determined in the first plane (PL1),
▪ The drive system (44, 46) is instructed to scan the distance measuring beam (47) over the target (T) in the second plane (PL2) running through the first center (C1),
▪ After the distance measuring beam (47) has been scanned over the target (T) in the second plane (PL2), the computer system determines a second center (C2) of the target (T) in the second plane (PL2) using the first angles, second angles, signal strengths and time stamps determined in the second plane (PL2), and
▪ The center of the target (T) is determined using the first center (C1) and second center (C2).

3. A computer program comprising instructions, which, when executed by a computer system (51, 53, 54), cause the computer system to carry out the method for determining a center of a target according to any one of claims 1 to 2.

4. An apparatus comprising means for carrying out the method for determining a center of a target according to any one of claims 1 to 2.

5. A method for calibrating a camera device (48) using M, M ≥ 1 targets, that are retro-reflective, and a surveying instrument (10) including a base (21), a support (22) being rotatable with respect to the base (21) about a first instrument axis (31), a measuring head (23) being rotatable with respect to the support (22) about a second instrument axis (32), a drive system (44, 46) configured to rotate the support (22) about the first instrument axis (31) and/or the measuring head (23) about the second instrument axis (32), a first angle encoder (43) configured to determine a first angle in a first encoder plane (34) with respect to a rotation of the support (22) about the first instrument axis (31), a second angle encoder (45) configured to determine a second angle in a second encoder plane (35) with respect to a rotation of the measuring head (23) about the second instrument axis (32), and a computer system (51, 53, 54) configured to control the surveying instrument and having evaluation and data processing functionality, wherein the measuring head (23) includes a distance measuring device (42) configured to emit a distance measuring beam (47) defining a third instrument axis (63), an illumination light source (49) configured to emit illumination light (50), and the camera device (48) having a field of view (FoV-1) and a camera axis (CA-1), the method being performed by the computer system and comprising:
▪ Performing an i-th loop M-times with i = 1 ... M, M ≥ 1, the i-th loop comprising:
- Instructing the surveying instrument (10) to capture an i-th target (T) of the M targets,
- Determining an i-th center of the i-th target using the method for determining a center of a target according to any one of claims 1 to 2,
- Instructing the drive system (44, 46) to move the distance measuring beam (47) to the i-th center of the i-th target,
- Instructing the surveying instrument (10) to determine at least an i-th center distance to the i-th target arranged in the i-th center using the distance measuring device (42),
- Instructing the surveying instrument (10) to take an i-th first image (IM1) of the i-th target with the illumination light (50) switched on and an i-th second image (IM2) of the i-th target with the illumination light (50) switched off using the illumination light source (49) and the camera device (48),
- Determining an i-th differential image (DIFF) between the i-th first image (IM1) and i-th second image (IM2), and determining an i-th centroid (CEN) in the i-th differential image (DIFF),
▪ Estimating one or more camera parameters of the camera device (48) using at least the M correspondences of the i-th center distance and the i-th centroid with i = 1 ... M, and a camera model for the camera device (48).

6. The method of claim 5, wherein
▪ the surveying instrument (10) is instructed to determine besides the i-th center distance to the i-th target arranged in the i-th center an i-th first center angle using the first angle encoder (43) and an i-th second center angle using the second angle encoder (45),
▪ the computer system determines an i-th center position with i = 1 ... M, using the i-th center distance, i-th first center angle and i-th second center angle, and
▪ the one or more camera parameters of the camera device (48) are estimated using at least the M correspondences of the i-th center position and the i-th centroid with i = 1 ... M, and the camera model for the camera device (48).

7. The method of any one of claims 5 to 6, wherein for at least one target of the M targets, the surveying instrument (10) is instructed to take a first image of the target with the illumination light (50) switched on and a second image of the target with the illumination light (50) switched off in at least two different views of the camera device (48) defined by different azimuth angles (φ₁, φ₂) in the first encoder plane and/or different zenith angles (θ₁, θ₂) in the second encoder plane, and for the different views of the camera device, the computer system determines differential images between the first and second images and determines centroids in the differential images.

8. A method for calibrating a camera device (48, 61) using a target, that is retro-reflective, and a surveying instrument (10) including a base (21), a support (22) being rotatable with respect to the base (21) about a first instrument axis (31), a measuring head (23) being rotatable with respect to the support (22) about a second instrument axis (32), a drive system (44, 46) configured to rotate the support (22) about the first instrument axis (31) and/or the measuring head (23) about the second instrument axis (32), a first angle encoder (43) configured to determine a first angle in a first plane (34) with respect to a rotation of the support (22) about the first instrument axis (31), a second angle encoder (45) configured to determine a second angle in a second plane (35) with respect to a rotation of the measuring head (23) about the second instrument axis (32), and a computer system (51, 53, 54) configured to control the surveying instrument and having evaluation and data processing functionality, wherein the measuring head (23) includes a distance measuring device (42) configured to emit a distance measuring beam (47) defining a third instrument axis (63), an illumination light source (49) configured to emit illumination light (50), and the camera device (48) having a field of view (FoV-1) and a camera axis (CA-1), the method being performed by the computer system and comprising the steps:
▪ Instructing the surveying instrument (10) to capture the target (T),
▪ Determining a center of the target (T) using a method for determining a center of a target according to any one of claims 1 to 2,
▪ Instructing the drive system (44, 46) to move the distance measuring beam (47) to the center of the target,
▪ Instructing the surveying instrument (10) to determine a center distance, a first center angle and a second center angle to the target (T) arranged in the center using the distance measuring device (42), first angle encoder (43) and second angle encoder (45),
▪ Determining a center position of the target (T) arranged in the center using the center distance, first center angle and second center angle,
▪ Performing a j-th loop N-times with j = 1 ... N, N ≥ 2, the j-th loop comprising:
- Instructing to set the camera device (48) to a j-th view, wherein the j-th view is defined by a j-th azimuth angle in the first encoder plane and a j-th zenith angle in the second encoder plane,
- Instructing the surveying instrument to take a j-th first image of the target with the illumination light (50) switched on and a j-th second image of the target with the illumination light (50) switched off using the camera device (48) and the illumination light source (49), and
- Determining a j-th differential image between the j-th first image and j-th second image, and determining a j-th centroid in the j-th differential image,
▪ Estimating one or more camera parameters of the camera device (48) using at least the center position of the target, the N correspondences of the j-th azimuth/zenith angles and the j-th centroid with j = 1 ... N, and a camera model for the camera device (48).

9. A computer program comprising instructions, which, when executed by a computer system, cause the computer system to carry out the method for calibrating a camera device according to any one of claims 5 to 8.

10. An apparatus comprising means for carrying out the method for calibrating a camera device according to any one of claims 5 to 8.
